(19) **Europäisches Patentamt European Patent Office Office européen des brevets**

(11) **EP 2 647 055 B1**

(12) **EUROPEAN PATENT SPECIFICATION**

(45) Date of publication and mention of the grant of the patent:
**12.08.2015 Bulletin 2015/33**

(51) Int Cl.:
***H01L 31/042*** (2014.01)

(21) Application number: **11801893.6**

(86) International application number:
**PCT/US2011/061606**

(22) Date of filing: **21.11.2011**

(87) International publication number:
**WO 2012/074808 (07.06.2012 Gazette 2012/23)**

(54) **PHOTOVOLTAIC DEVICE FOR MEASURING IRRADIANCE AND TEMPERATURE**

FOTOVOLTAIKVORRICHTUNG ZUR MESSUNG VON STRAHLUNG UND TEMPERATUR

DISPOSITIF PHOTOVOLTAÏQUE POUR MESURER L'IRRADIATION ET LA TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2010 US 419136 P**

(43) Date of publication of application:
**09.10.2013 Bulletin 2013/41**

(73) Proprietor: **Dow Global Technologies LLC Midland, MI 48674 (US)**

(72) Inventors:
• **PISKLAK, Stephen, G.**
  **Hockessin, DE 19707 (US)**
• **KING, David, L.**
  **Albuquerque, NM 87123 (US)**
• **LESNIAK, Michael, J.**
  **Midland, MI 48631 (US)**
• **RAMESH, Narayan**
  **Midland, MI 48640 (US)**

(74) Representative: **Beck Greener**
  **Fulwood House**
  **12 Fulwood Place**
  **London WC1V 6HR (GB)**

(56) References cited:
**EP-A1- 2 249 457       US-A1- 2004 211 459 US-A1- 2009 182 532**

## Description

INTRODUCTION

The vast majority of solar array monitoring systems currently on the market monitor only the solar array output. These array monitoring systems give no indication of whether or not the solar array is functioning as designed. In order to provide such information, irradiance and module temperature must be measured concurrently and at the same location as the array. In commercial installations, this is typically done with a weather monitoring station. Such weather monitoring stations may include a panel temperature sensor, an outside temperature and relative humidity sensor, a pyranometer (for measuring irradiance), and a wind speed and wind direction sensor. These components take the form of a number of cubical and cylindrical housings (for the outside temperature/RH sensor and pyrometer), and vaned impellers mounted on one or more support structures proximate the array. For a residential installation, in which building aesthetics play an important role, such a weather monitoring station is impractical. Residential monitoring systems, therefore, rarely monitor array performance, only output. Documents EP2249457A and US2009/182532A disclose monitoring systems for solar installations.

SUMMARY

The proposed technology utilizes, in one embodiment, a sensor module having substantially the same the appearance and form factor of power-generator modules in a solar array. The signals sent from this sensor module may be processed and compared to the output of the power-generator modules to determine an operational state of the array.

In one aspect, the technology relates to a solar array system including: a plurality of power-generator modules, each power-generator module having an identical form factor and including a plurality of photovoltaic cells wired for power generation; at least one sensor module having a substantially identical appearance and form factor as the power-generator modules and including a like plurality of photovoltaic cells; an array performance monitor; and wherein at least one photovoltaic cell in the sensor module delivers a short-circuit current to the array performance monitor and at least one photovoltaic cell in the sensor module delivers an open-circuit voltage to the array performance monitor.

In another aspect, the invention relates to a solar array kit useful in forming a solar array system, the kit including: an array performance monitor; a plurality of power-generator modules including connectors for communicating with the array performance monitor, each power-generator module having an identical form factor and including a plurality of photovoltaic cells; and at least one sensor module including connectors for communicating with the array performance monitor, the at least one sensor module having a substantially identical appearance and form factor as the power-generator modules and including a like plurality of photovoltaic cells, wherein at least one photovoltaic cell in the sensor module is adapted to deliver a short-circuit current to the array performance monitor and at least one photovoltaic cell in the sensor module is adapted to deliver an open-circuit voltage to the array performance monitor.

In another aspect, the invention relates to a method of determining an operational state of a solar array, the method including: providing a photovoltaic module array including at least one sensor module and at least one power-generator module, wherein the sensor module and power-generator module are substantially identical in appearance and form factor; providing a receiver for receiving a signal from each of the sensor module and the power-generator module; measuring a first signal from the power-generator module, wherein the first signal includes a power output; measuring a second signal sent from the sensor module, wherein the second signal includes at least one of a short-circuit current and an open-circuit voltage; providing a processor for processing the first signal and the second signal; and determining the operational state of the solar array based at least in part on the first signal and the second signal.

In another aspect, the invention relates to a sensing module for a solar array system including: a first photovoltaic cell wired to generate a short-circuit current; and a second photovoltaic cell wired to generate an open-circuit voltage.

BRIEF DESCRIPTION OF THE DRAWINGS

There are shown in the drawings, embodiments which are presently preferred, it being understood, however, that the technology is not limited to the precise arrangements and instrumentalities shown.

FIG. 1A is a schematic diagram of a solar array system.
FIG. 1B is an alternative schematic diagram of a solar array system.
FIG. 2A is a schematic diagram of a sensing module.
FIG. 2B is a schematic circuit diagram for converting an output signal of a photovoltaic cell.
FIG. 2C is an alternative schematic diagram of a photovoltaic module.
FIGS. 3A and 3B depict a method of determining an operational state of a solar array.

DETAILED DESCRIPTION

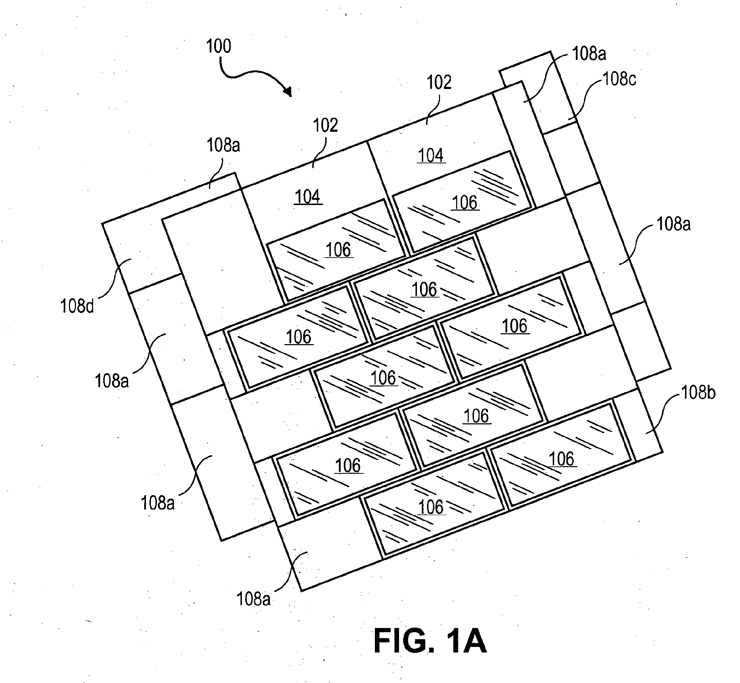

FIG. 1A depicts an installation of a solar array system 100 which may be used in conjunction with the systems and methods described herein. The system 100 includes a number of building integrated photovoltaic devices 102 that include both a body portion 104 and a photovoltaic cell module 106. The system 100 may include at least one edge piece 108a located at the end or within the at least two rows/columns of photovoltaic devices 102. Additionally, at least one starter piece 108b, at least one filler piece 108c, and at least one end piece 108d may be utilized. These components, as well as elements used for connection of these components, are described in International Publication Number WO 2009/137353.

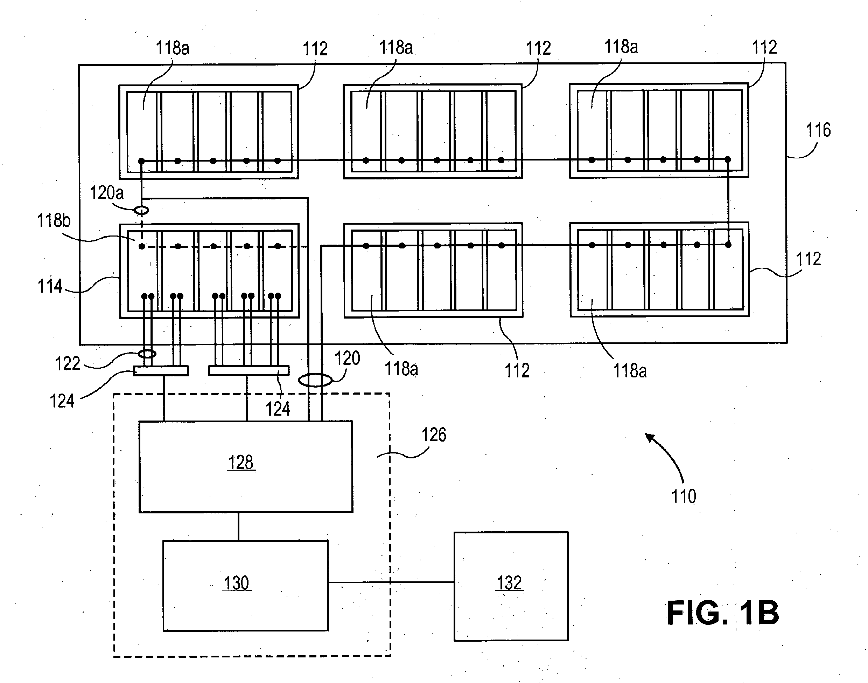

FIG. 1B depicts an embodiment of a solar array system 110. The solar array system 110 includes a plurality of power-generator modules 112 and one sensor module 114 installed, in this case, on a roof 116 of a building or other structure. In the depicted embodiment, five power-generator modules 112 and one sensor module 114 are utilized. Any number of power-generator modules and sensor modules may be installed, however, as desired for a particular application. For residential applications, the maximum array square footage is often limited by, for example, roof size. Accordingly, a single sensor module utilized with any number of power generator modules may be desirable. In particularly large installations, however, two or more sensor modules may be used in a particular array. For example, large commercial array applications having several blocks or groupings of modules may include a sensor module for each block of power-generator modules.

The technology described herein has particular application in the residential solar market because the sensor modules are substantially identical to the power generator modules in appearance and form factor. Dimensions of the two types of modules, as well as the number of photovoltaic cells contained in each, may be substantially the same. Array systems utilizing differently sized and configured power-generator modules and sensor modules are also contemplated. One application where identical modules may be desirable are building integrated solar array systems, where aesthetics may be a significant determining factor.

Modules may be building integrated solar modules, also referred to as a building integrated photovoltaics (BIPV), which may be used to replace conventional building materials in parts of a building envelope such as the roof, skylights, or facades. The module may be a thin film solar cell integrated to a flexible polymer roofing membrane, a module configured to resemble one or more roofing shingles (for example, the POWERHOUSE brand of BIPV shingles manufactured by the Dow Chemical Company), or semitransparent modules used to replace architectural elements commonly made with glass or similar materials, such as windows and skylights. Alternatively, the solar module may be a rigid solar module mounted to an architectural element such as a roof or installed within a large field array. In short, the technology is not limited to building integrated photovoltaic or arrays having discrete sensor modules and generator modules. The concepts, operation, and functionality described herein may be used with any desired configuration where use of a dedicated weather monitoring station is undesirable.

Returning to FIG. 1B, each of the power-generator modules 112 contains five photovoltaic cells 118a. A power circuit 120 connected to the power-generator modules 112 is wired in series, as typical for solar applications. The sensor module 114 also contains five photovoltaic cells 118b. Sensor circuits 122 are wired individually to each photovoltaic cell 118b, as described in more detail below. The system 110 also includes one or more driver/comparator circuits 124, as described below. An array performance monitor 126 includes an input/output (I/O) module 128 for receiving the signals sent from the power-generator modules 112 and the sensor module 114. A processor 130 performs the calculations and other comparisons described herein. The array performance monitor 126 may be a solar array control system, a stand-alone PC, or other controlling or monitoring device or system. The solar array system 126 may power various types of equipment 132, as desired for the particular application. Other components of the array system 110 are described below.

The array system 110 may include an optional sensor module power circuit 120a. The optional sensor module power circuit 120a is wired to the power circuit 120 and allows the sensor module 114 to be used for power generation, if desired. The wiring configuration for the sensor module power circuit 120a is depicted schematically. Other configurations are contemplated and will be apparent to a person of skill in the art. In other embodiments, the I/O module 128 may be replaced with a receiver. An I/O module may be desirable, however, for applications that include one or more bypass circuits in the power circuit 120 to bypass damaged cells and/or modules. Damaged cells or modules are known to reduce the efficiency of solar array systems and bypassing such components may be desirable in certain applications. Additionally, control circuitry or programs may be incorporated into the array performance monitor 126 to allow for either manual or automatic activation of the sensor module power circuit 120a, bypass circuits, or other functions.

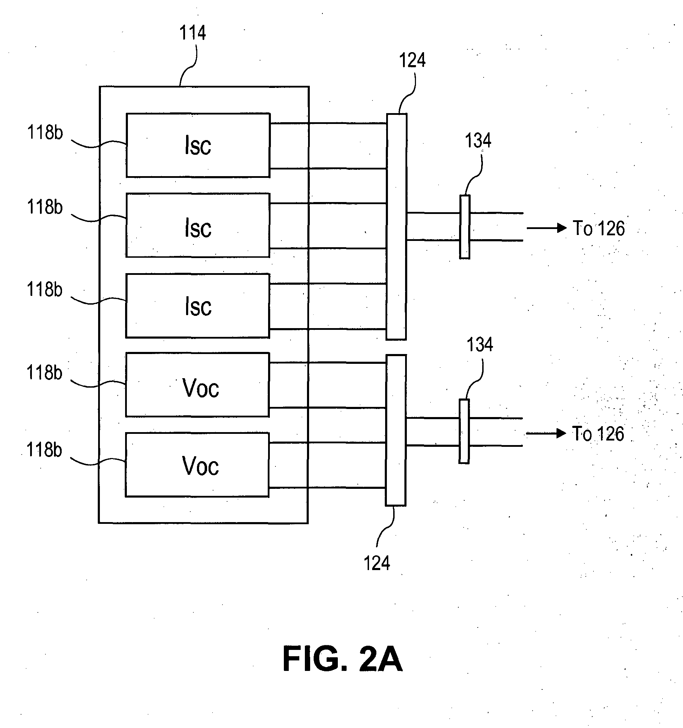

FIG. 2A depicts an embodiment of a sensing module 114. The depicted module 114 includes five photovoltaic cells 118b. Three short-circuit current cells $I_{sc}$ are wired to deliver a signal that may be used to determine an irradiance value for an array. Two open-circuit voltage cells $V_{oc}$ are wired to deliver a signal that may be used to determine a cell temperature. The driver comparator circuit 124 and a signal conditioner 134 are also depicted. The output from the signal conditioner 134 is delivered to the array performance monitor 126. In the depicted embodiment, the driver/comparator circuit 124 and signal conditioner 134 are discrete from the sensor array 114. These components 124, 134 may be combined into a circuit, separate from both the sensor module 114 and the array performance monitor 126, for example, in a component located below a roof surface, proximate the array. It is contemplated that the components 124, 134 also may be incorporated into the sensor module 114, for example, in a recess located on the underside of the sensor module. Alternatively, the components 124, 134 may be incorporated into the I/O module 128 or the processor 130 of the array performance monitor system 126 depicted in FIG. 1B.

Any number of short-circuit current cells $I_{sc}$ and open-circuit voltage cells $V_{oc}$ may be utilized, as desired for a particular application. Use of multiple cells allows for preliminary processing, such as signal integrity checking, signal averaging, other functions, or combinations thereof. This preliminary processing may be performed by the driver/comparator circuit 124. This pre-processing may improve accuracy of output from the cells 118b. The signals sent from the cells 118b may be 0-.5 $V_{dc}$. After processing, the output from the signal conditioner 134 is a 4-20 mA signal that is proportional to both of the irradiance incident to the cell and the cell temperature. This signal is then sent to the array performance monitor 126 for further calculations. The 4-20 mA output signal from the short-circuit current cells $I_{sc}$ may be converted into an irradiance value using, in one embodiment, the following formula:

$$\text{(i)} \qquad E = A_3 I_E - A_4$$

where $E$ represents irradiance, $I_E$ is a 4-20 mA signal associated with Isc, $A_3$ is a constant between 56 and 75, and $A_4$ is a constant between 125 and 300. The constants are based on the output and input scales. Other constants may be utilized in other embodiments. The signal from the open-circuit voltage cells $V_{oc}$ may be converted into a cell temperature value using, in one embodiment, the following formula:

$$\text{(ii)} \qquad T = A_1 I_T - A_2$$

where $T$ represents temperature, $I_T$ is 4-20 mA signal associated with Voc, $A_1$ is a constant between 9.3 and 10.4, and $A_2$ is a constant between 81 and 88. Again, the constants are based on the output and input scales, and other constants may be utilized in other embodiments. However, these are but examples of formulas of that may be used to determine the irradiance and cell temperature. Other formulas will be apparent to a person of skill in the art.

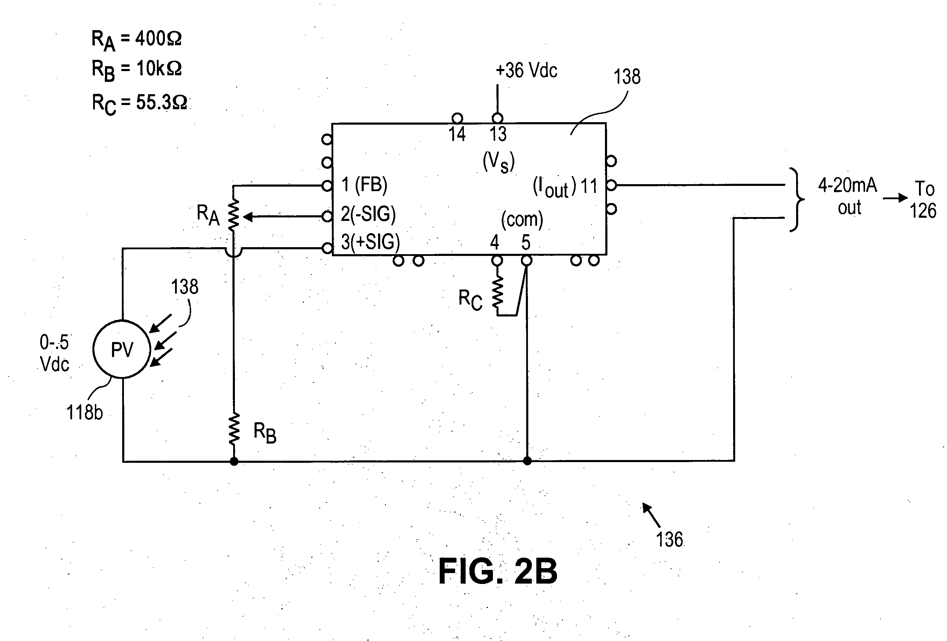

FIG. 2B is a schematic of an embodiment of one possible circuit diagram 136 for converting an output signal from a photovoltaic cell 118b. The photovoltaic cell 118b may be the short-circuit current cell $I_{sc}$ for irradiance measurement or the open-circuit voltage cell $V_{oc}$ for cell temperature measurement. The photovoltaic cell 118b outputs a 0-.5 $V_{dc}$ signal based upon energy 138 received from a solar power source (i.e., the sun). After the pre-processing by the driver/comparator described above, the circuit converts the circuitry output signal into a 4-20 mA signal that is sent to the array performance monitor 126 for further processing. In this embodiment, the circuit utilizes an AD 694 monolithic current transmitter 138, manufactured by Analog Devices, Inc. Other acceptable circuit configurations based on different chips or other combinations of hardware, software, and firmware will be apparent to a person of skill in the art.

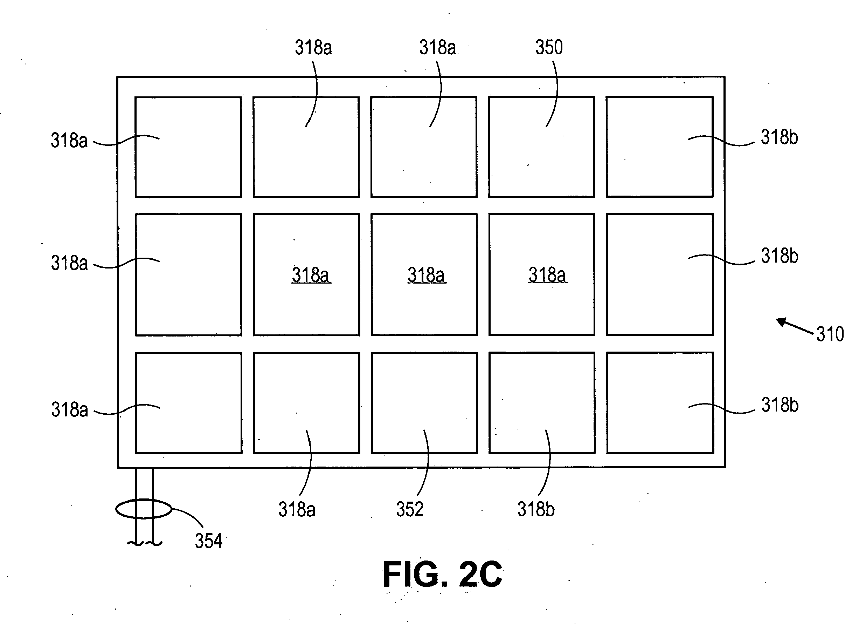

FIG. 2C depicts an alternative embodiment of a solar module 310. The solar module 310 may be a BIPV or other type of module, as described above. The solar module 310 includes a number of sensor cells 318b. Additionally, a reference current generator cell 350 may be incorporated into the module 310. The reference current generator cell 350 generates a reference current that may be used to determine cell degradation. Photovoltaic cells lose efficiency over time but, since the various cells (power-generator, sensor, reference) are constructed of the same material, they will degrade at a similar rate. Accordingly, use of a reference current generator cell allows an associated array performance monitor to determine if decreased efficiency of a particular cell is due to general cell degradation or to cell damage that may necessitate replacement. A differential-pressure wind-speed sensor may also be incorporated therein. Such wind-speed sensors are manufactured for example by Sensiron under the model name ASP1400. The remaining cells in the module 310 may be power-generator cells 318a. The various internal wiring circuits are not shown in FIG. 2C, for clarity. A single wiring bundle 354 may be used for all circuits, to limit penetrations to the interior of the module 310, as well as for ease of installation. Such a solar module 310 may be used as a stand-alone power source, incorporating performance data output, which may be used to determine an operational state of the module 310.

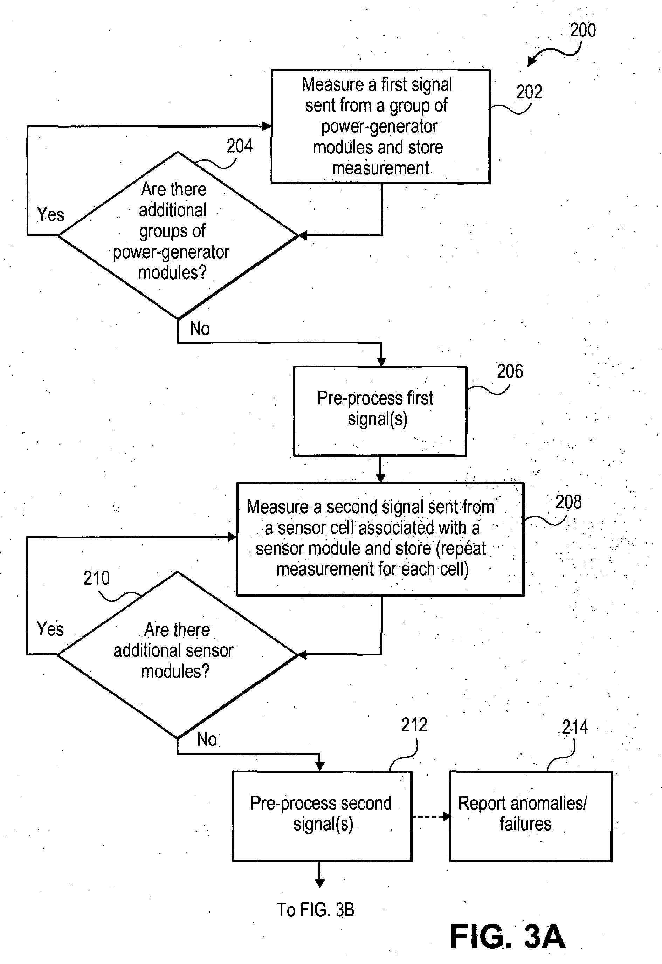

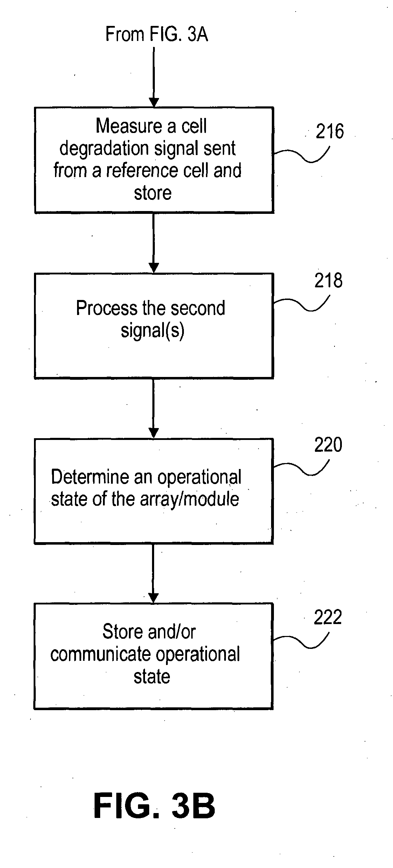

FIG. 3 depicts an embodiment of a method 200 of determining an operational state of a solar array. The method 200 described below may also be used to determine the operational state of the stand-alone module 310 described above in FIG. 2C, or many other configurations of solar arrays or modules that utilize non-power-generating photovoltaic cells to determine an operational state of an array or module. If used in the context of an array, the method contemplates a sensor module having a plurality of photovoltaic cells, where certain of those cells generate a signal corresponding to a short-circuit current for determining an irradiance value, and where certain of those cells generate a signal corresponding to an open-circuit voltage for determining an cell temperature. The array system also includes a receiver (alternatively, and I/O module) and an array performance monitor, including a processor.

The method 200 includes measuring a first signal sent from a group of power-generator modules (Step 202). In this case, each group of power-generator modules is associated with a single sensor module. This first signal corresponds to a power output from the group of power-generator modules. In most cases, a single power output will be delivered from the power-generator modules in the array. However, the method does contemplate multiple power outputs from the array, for example, where certain power-generator modules produce dedicated power outputs for particular applications or equipment, or when multiple groups are present in large-scale field array applications. If multiple groups are present (Step 204), the method measures signals from each group of power-generator modules and stores these multiple signals (Step 202) as well. The method 200 then pre-processes the multiple signals (Step 206). This pre-processing may include determining a total combined power output for the array, or storing each of the power outputs for later comparison to the corresponding signals from the sensor module(s).

The method 200 includes measuring a second signal sent from a sensor cell within a sensor module (Step 208). Multiple signals corresponding to an equivalent number of sensor cells are measured. These signals correspond to either a short-circuit current or an open-circuit voltage. If multiple groups are present (Step 210), the method measures signals from each group of sensor modules and stores these multiple signals (Step 208) as well. These second signals may be preprocessed (Step 212). For example, either or both of the signals types (i.e., short-circuit current, open-circuit voltage) may be averaged, high and/or low signal values may be disregarded, or null signal values or other signal values that may indicate an error or cell failure may be identified. The latter circumstances may be reported as anomalies or failures to the array performance monitor (Step 214), indicating that service or replacement of a module may be required. Additionally, signal values that correspond to groups of power-generator modules having dedicated power outputs (see Step 202, above) may be stored separately. If present, a reference current signal may be received from reference cell, and subsequently measured and stored (Step 216).

Once the various signals are measured and stored, the second signals may be processed to convert the values received into a calculated power output for each group of power-generator modules (Step 218). This calculated power output may then be compared to the actual power output (i.e., the first signal(s)) to determine an operational state of a group of modules or the entire array (Step 220). A basic operational state is an efficiency rating that relates to the percentage of actual power produced versus the calculated value that should be produced based on irradiance and cell temperature. This operational state may then be stored and/or communicated to an operator of the array system, a service provider, or other entity or device (Step 222). Various types of communications are contemplated. For example, a monitoring system panel light may be illuminated or warning message sent when the calculated value deviates by a predetermined percentage or value from the actual power output.

The solar array system described above may be sold as a kit, either in a single package or in multiple packages. A kit may include an array performance monitor, a sensor module, and one or more power-generator modules, or each of these components may be sold separately. Each module, as well as the array performance monitor, includes a plurality of connectors for communication between the various system components. If desired, wiring may be included, although instructions included with the kit may also specific the type of wiring required based on the particular installation. Additional sensor modules and power-generator modules may be available separately, so an array field of a desired size may be assembled. Additionally, the array performance monitor may be loaded with the necessary software or firmware required for use of the system. In alternative configurations, software may be included on various types of storage media (CDs, DVDs, USB drives, etc.) for upload to a standard PC, if the PC is to be used as the array performance monitor, or if the PC is used in conjunction with the array performance monitor as a user or service interface. Additionally, website addresses and passwords may be included in the kit instructions for programs to be downloaded from a website on the internet.

The technology described herein can be realized in hardware, software, or a combination of hardware and software. The technology described herein can be realized in a centralized fashion in one computer system or in a distributed fashion where different elements are spread across several interconnected computer systems. Any kind of computer system or other apparatus adapted for carrying out the methods described herein is suited. A typical combination of hardware and software can be a general purpose computer system with a computer program that, when being loaded and executed, controls the computer system such that it carries out the methods described herein.

The technology described herein also can be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

In the embodiments described above, the software may be configured to run on any computer or workstation such as a PC or PC-compatible machine, an Apple Macintosh, a Sun workstation, a dedicated array monitoring system, etc. In general, any device can be used as long as it is able to perform all of the functions and capabilities described herein. The particular type of computer, workstation, or system is not central to the technology, nor is the configuration, location, or design of a database, which may be flat-file, relational, or object-oriented, and may include one or more physical and/or logical components.

The servers may include a network interface continuously connected to the network, and thus support numerous geographically dispersed users and applications. In a typical implementation, the network interface and the other internal components of the servers intercommunicate over a main bi-directional bus. The main sequence of instructions effectuating the functions of the technology and facilitating interaction among clients, servers and a network, can reside on a mass-storage device (such as a hard disk or optical storage unit) as well as in a main system memory during operation. Execution of these instructions and effectuation of the functions of the technology is accomplished by a central-processing unit ("CPU").

A group of functional modules that control the operation of the CPU and effectuate the operations of the technology as described above can be located in system memory (on the server or on a separate machine, as desired). An operating system directs the execution of low-level, basic system functions such as memory allocation, file management, and operation of mass storage devices. At a higher level, a control block, implemented as a series of stored instructions, responds to client-originated access requests by retrieving the user-specific profile and applying the one or more rules as described above.

Data communication may take place via any media such as standard telephone lines, LAN or WAN links (e.g., T1, T3, 56kb, X.25), broadband connections (ISDN, Frame Relay, ATM), wireless links, and so on. Preferably, the network can carry TCP/IP protocol communications, and HTTP/HTTPS requests made by the client and the connection between the client and the server can be communicated over such TCP/IP networks. The type of network is not a limitation, however, and any suitable network may be used. Typical examples of networks that can serve as the communications network include a wireless or wired Ethernet-based intranet, a local or wide-area network (LAN or WAN), and/or the global communications network known as the Internet, which may accommodate many different communications media and protocols.

**Claims**

1. A solar array system (100, 110) comprising:

   a plurality of power-generator modules (106, 112), each power-generator module having an identical form factor and comprising a plurality of photovoltaic cells wired for power generation; at least one sensor module (114) having a substantially identical appearance and form factor as the power-generator modules and comprising a like plurality of photovoltaic cells; an array performance monitor (116); and wherein at least one photovoltaic cell in the sensor module delivers a short-circuit current to the array performance monitor and at least one photovoltaic cell in the sensor module delivers an open-circuit voltage to the array performance monitor.

2. The solar array system of claim 1, wherein the plurality of power-generator modules generates a first signal comprising a power output, and wherein the at least one sensor module generates a second signal comprising at least one of the short-circuit current and the open-circuit voltage.

3. The solar array system as in any of the preceding claims, wherein the array performance monitor comprises a processor (130) for processing the first signal and the second signal and determining an operational state of the solar array based at least in part on the first signal and the second signal.

4. The solar array system as in any of the preceding claims, wherein the short-circuit current corresponds to an irradiance value for the solar array system, and wherein the open-circuit voltage corresponds to a cell temperature value for the solar array system.

5. The solar array system of as in any of the preceding claims, wherein the sensor module comprises a plurality of photovoltaic cells (118b), wherein at least a first sensor module photovoltaic cell is wired to generate a short-circuit current and at least a second sensor module photovoltaic cell is wired to generate an open-circuit voltage.

6. The solar array system of claim 1, wherein the sensor module comprises at least three first sensor module photovoltaic cells and at least two second sensor module photovoltaic cells.

7. The solar array system as in claim 5, wherein each of the first sensor module photovoltaic cells is wired to generate a short-circuit current, and wherein each of the second sensor module photovoltaic cells is wired to generate an open-circuit voltage.

8. A solar array kit useful in forming a system as in any one of claims 1-7 comprising:

   an array performance monitor (126); a plurality of power-generator modules (106, 112) comprising connectors for communicating with the array performance monitor, each power-generator module having an identical form factor and comprising a plurality of photovoltaic cells; and

at least one sensor module (114) comprising connectors for communicating with the array performance monitor, the at least one sensor module having a substantially identical appearance and form factor as the power-generator modules and comprising a like plurality of photovoltaic cells,

wherein at least one photovoltaic cell in the sensor module is adapted to deliver a short-circuit current to the array performance monitor and at least one photovoltaic cell in the sensor module is adapted to deliver an open-circuit voltage to the array performance monitor.

9. A method of determining an operational state of a solar array (100, 110) the method comprising:

providing a photovoltaic module array comprising at least one sensor module (114) and at least one power-generator module (106, 112) wherein the sensor module and power-generator module are substantially identical in appearance and form factor;

providing a receiver for receiving a signal from each of the sensor module and the power-generator module;

measuring a first signal from the power-generator module, wherein the first signal comprises a power output;

measuring a second signal sent from the sensor module, wherein the second signal comprises at least one of a short-circuit current and an open-circuit voltage;

providing a processor (126) for processing the first signal and the second signal; and

determining the operational state of the solar array based at least in part on the first signal and the second signal.

10. The method of claim 9, wherein the short-circuit current corresponds to an irradiance value for the solar array system, and wherein the open-circuit voltage corresponds to a cell temperature value for the solar array system.

11. The method of claims 9-10, wherein the sensor module comprises a plurality of photovoltaic cells (118b), wherein at least a first sensor module photovoltaic cell delivers a short-circuit current, and wherein at least a second sensor module photovoltaic cell delivers an open-circuit voltage.

12. The method as in any of claims 9 to 11, wherein the sensor module comprises:

at least three first sensor module photovoltaic cells, wherein each of the first sensor module photovoltaic cells delivers a short-circuit current to the receiver; and

at least two second sensor module photovoltaic cells, wherein each of the second sensor module photovoltaic cells delivers an open-circuit voltage to the receiver.

13. The method of claim 12, further comprising averaging the values of the short-circuit currents and averaging the values of the open-circuit voltages.

**Patentansprüche**

1. Ein Solarzellengruppensystem (100, 110), beinhaltend:

eine Vielzahl von Stromerzeugermodulen (106, 112), wobei jedes Stromerzeugermodul einen identischen Formfaktor aufweist und eine Vielzahl von fotovoltaischen Zellen beinhaltet, die zur Stromerzeugung verdrahtet sind;

mindestens ein Sensormodul (114), das ein im Wesentlichen identisches Erscheinungsbild und einen im Wesentlichen identischen Formfaktor wie die Stromerzeugermodule aufweist und eine ähnliche Vielzahl von fotovoltaischen Zellen beinhaltet;

einen Gruppenleistungsüberwacher (126); und wobei mindestens eine fotovoltaische Zelle in dem Sensormodul einen Kurzschlussstrom an den Gruppenleistungsüberwacher liefert und mindestens eine fotovoltaische Zelle in dem Sensormodul eine Leerlaufspannung an den Gruppenleistungsüberwacher liefert.

2. Solarzellengruppensystem gemäß Anspruch 1, wobei die Vielzahl von Stromerzeugermodulen ein erstes Signal erzeugt, das eine Nutzleistung beinhaltet, und wobei das mindestens eine Sensormodul ein zweites Signal erzeugt, das mindestens eines von dem Kurzschlussstrom und der Leerlaufspannung beinhaltet.

3. Solarzellengruppensystem gemäß einem der vorhergehenden Ansprüche, wobei der Gruppenleistungsüberwacher einen Prozessor (130) zum Verarbeiten des ersten Signals und des zweiten Signals und zum Bestimmen eines Betriebszustands der Solarzellengruppe mindestens teilweise auf der Basis des ersten Signals und des zweiten Signals beinhaltet.

4. Solarzellengruppensystem gemäß einem der vorhergehenden Ansprüche, wobei der Kurzschlussstrom einem Bestrahlungsstärkewert für das Solarzellengruppensystem entspricht und wobei die Leerlaufspannung einem Zellentemperaturwert für das Solarzellengruppensystem entspricht.

**5.** Solarzellengruppensystem gemäß einem der vorhergehenden Ansprüche, wobei das Sensormodul eine Vielzahl von fotovoltaischen Zellen (118b) beinhaltet, wobei mindestens eine erste fotovoltaische Zelle des Sensormoduls verdrahtet ist, um einen Kurzschlussstrom zu erzeugen, und mindestens eine zweite fotovoltaische Zelle des Sensormoduls verdrahtet ist, um eine Leerlaufspannung zu erzeugen.

**6.** Solarzellengruppensystem gemäß Anspruch 1, wobei das Sensormodul mindestens drei erste fotovoltaische Zellen des Sensormoduls und mindestens zwei zweite fotovoltaische Zellen des Sensormoduls beinhaltet.

**7.** Solarzellengruppensystem gemäß Anspruch 5, wobei jede der ersten fotovoltaischen Zellen des Sensormoduls verdrahtet ist, um einen Kurzschlussstrom zu erzeugen, und wobei jede der zweiten fotovoltaischen Zellen des Sensormoduls verdrahtet ist, um eine Leerlaufspannung zu erzeugen.

**8.** Solarzellengruppenausstattung, die zum Bilden eines Systems gemäß einem der Ansprüche 1-7 verwendbar ist, beinhaltend:

> einen Gruppenleistungsüberwacher (126);
> eine Vielzahl von Stromerzeugermodulen (106, 112), die Verbindungselemente zum Kommunizieren mit dem Gruppenleistungsüberwacher beinhalten, wobei jedes Stromerzeugermodul einen identischen Formfaktor aufweist und eine Vielzahl von fotovoltaischen Zellen beinhaltet; und
> mindestens ein Sensormodul (114), das Verbindungselemente zum Kommunizieren mit dem Gruppenleistungsüberwacher beinhaltet, wobei das mindestens eine Sensormodul ein im Wesentlichen identisches Erscheinungsbild und einen im Wesentlichen identischen Formfaktor wie die Stromerzeugermodule aufweist und eine ähnliche Vielzahl von fotovoltaischen Zellen beinhaltet;
> wobei mindestens eine fotovoltaische Zelle in dem Sensormodul angepasst ist, um einen Kurzschlussstrom an den Gruppenleistungsüberwacher zu liefern, und
> mindestens eine fotovoltaische Zelle in dem Sensormodul angepasst ist, um eine Leerlaufspannung an den Gruppenleistungsüberwacher zu liefern.

**9.** Ein Verfahren zum Bestimmen eines Betriebszustands einer Solarzellengruppe (100, 110), wobei das Verfahren Folgendes beinhaltet:

> Bereitstellen einer fotovoltaischen Modulgruppe, die mindestens ein Sensormodul (114) und mindestens ein Stromerzeugermodul (106, 112) beinhaltet, wobei das Sensormodul und das Stromerzeugermodul im Wesentlichen im Erscheinungsbild und im Formfaktor identisch sind;
> Bereitstellen eines Empfängers zum Empfangen eines Signals von sowohl dem Sensormodul als auch dem Stromerzeugermodul;
> Messen eines ersten Signals von dem Stromerzeugermodul, wobei das erste Signal eine Nutzleistung beinhaltet;
> Messen eines zweiten Signals, das von dem Sensormodul gesendet wird, wobei das zweite Signal mindestens eines von einem Kurzschlussstrom und einer Leerlaufspannung beinhaltet;
> Bereitstellen eines Prozessors (126) zum Verarbeiten des ersten Signals und des zweiten Signals; und
> Bestimmen des Betriebszustands der Solarzellengruppe mindestens teilweise auf der Basis des ersten Signals und des zweiten Signals.

**10.** Verfahren gemäß Anspruch 9, wobei der Kurzschlussstrom einem Bestrahlungsstärkewert für das Solarzellengruppensystem entspricht und wobei die Leerlaufspannung einem Zellentemperaturwert für das Solarzellengruppensystem entspricht.

**11.** Verfahren gemäß den Ansprüchen 9-10, wobei das Sensormodul eine Vielzahl von fotovoltaischen Zellen (118b) beinhaltet, wobei mindestens eine erste fotovoltaische Zelle des Sensormoduls einen Kurzschlussstrom liefert, und wobei mindestens eine zweite fotovoltaische Zelle des Sensormoduls eine Leerlaufspannung liefert.

**12.** Verfahren gemäß einem der Ansprüche 9 bis 11, wobei das Sensormodul Folgendes beinhaltet:

> mindestens drei erste fotovoltaische Zellen des Sensormoduls, wobei jede der ersten fotovoltaischen Zellen des Sensormoduls einen Kurzschlussstrom an den Empfänger liefert; und
> mindestens zwei zweite fotovoltaische Zellen des Sensormoduls, wobei jede der zweiten fotovoltaischen Zellen des Sensormoduls eine Leerlaufspannung an den Empfänger liefert.

**13.** Verfahren gemäß Anspruch 12, das ferner das Mitteln der Werte der Kurzschlussströme und das Mitteln der Werte der Leerlaufspannungen beinhaltet.

**Revendications**

**1.** Un système de réseau solaire (100, 110), comprenant :

une pluralité de modules générateurs de puissance (106, 112), chaque module générateur de puissance ayant un facteur de forme identique et comprenant une pluralité de cellules photovoltaïques câblées pour une génération de puissance ;
au moins un module capteur (114), ayant une apparence et un facteur de forme substantiellement identiques aux modules générateurs de puissance et comprenant une pluralité analogue de cellules photovoltaïques ;
un écran de performance de réseau (126) ; et
dans lequel au moins une cellule photovoltaïque dans le module capteur délivre un courant de court-circuit à l'écran de performance de réseau et au moins une cellule photovoltaïque dans le module capteur délivre une tension de circuit ouvert à l'écran de performance de réseau.

2. Le système de réseau solaire de la revendication 1, dans lequel la pluralité de modules générateurs de puissance génère un premier signal comprenant une sortie de puissance, et dans lequel l'au moins un module capteur génère un deuxième signal comprenant au moins soit le courant de court-circuit, soit la tension de circuit ouvert.

3. Le système de réseau solaire tel que dans n'importe lesquelles des revendications précédentes, dans lequel l'écran de performance de réseau comprend un processeur (130) destiné à traiter le premier signal et le deuxième signal et à déterminer un état de fonctionnement du réseau solaire sur la base au moins en partie du premier signal et du deuxième signal.

4. Le système de réseau solaire tel que dans n'importe lesquelles des revendications précédentes, dans lequel le courant de court-circuit correspond à une valeur d'irradiation pour le système de réseau solaire, et dans lequel la tension de circuit ouvert correspond à une valeur de température de cellule pour le système de réseau solaire.

5. Le système de réseau solaire tel que dans n'importe lesquelles des revendications précédentes, dans lequel le module capteur comprend une pluralité de cellules photovoltaïques (118b), dans lequel au moins une première cellule photovoltaïque de module capteur est câblée pour générer un courant de court-circuit et au moins une deuxième cellule photovoltaïque de module capteur est câblée pour générer une tension de circuit ouvert.

6. Le système de réseau solaire de la revendication 1, dans lequel le module capteur comprend au moins trois premières cellules photovoltaïques de module capteur et au moins deux deuxièmes cellules photovoltaïques de module capteur.

7. Le système de réseau solaire tel que dans la revendication 5, dans lequel chacune des premières cellules photovoltaïques de module capteur est câblée pour générer un courant de court-circuit, et dans lequel chacune des deuxièmes cellules photovoltaïques de module capteur est câblée pour générer une tension de circuit ouvert.

8. Un kit de réseau solaire utile pour former un système tel que dans n'importe laquelle des revendications 1 à 7 comprenant :

un écran de performance de réseau (126) ;
une pluralité de modules générateurs de puissance (106, 112) comprenant des connecteurs pour communiquer avec l'écran de performance de réseau, chaque module générateur de puissance ayant un facteur de forme identique et comprenant une pluralité de cellules photovoltaïques ; et
au moins un module capteur (114) comprenant des connecteurs pour communiquer avec l'écran de performance de réseau, l'au moins un module de capteur ayant une apparence et un facteur de forme substantiellement identiques aux modules générateurs de puissance et comprenant une pluralité analogue de cellules photovoltaïques,
dans lequel au moins une cellule photovoltaïque dans le module capteur est conçue pour délivrer un courant de court-circuit à l'écran de performance de réseau et au moins une cellule photovoltaïque dans le module capteur est conçue pour délivrer une tension de circuit ouvert à l'écran de performance de réseau.

9. Une méthode pour déterminer un état de fonctionnement d'un réseau solaire (100, 110), la méthode comprenant :

le fait de fournir un réseau de module photovoltaïque comprenant au moins un module capteur (114) et au moins un module générateur de puissance (106, 112) dans laquelle le module capteur et le module générateur de puissance sont substantiellement identiques en apparence et en facteur de forme ;
le fait de fournir un récepteur pour recevoir un signal de chaque module parmi le module capteur et le module générateur de puissance ;
le fait de mesurer un premier signal provenant du module générateur de puissance, dans laquelle le premier signal comprend une sortie de puissance ;
le fait de mesurer un deuxième signal envoyé depuis le module capteur, dans laquelle le deuxième signal comprend au moins soit un courant de court-circuit, soit une tension de circuit ouvert ;

le fait de fournir un processeur (126) pour traiter le premier signal et le deuxième signal ; et

le fait de déterminer l'état de fonctionnement du réseau solaire sur la base au moins en partie du premier signal et du deuxième signal.

10. La méthode de la revendication 9, dans laquelle le courant de court-circuit correspond à une valeur d'irradiation pour le système de réseau solaire, et dans laquelle la tension de circuit ouvert correspond à une valeur de température de cellule pour le système de réseau solaire.

11. La méthode des revendications 9 à 10, dans laquelle le module capteur comprend une pluralité de cellules photovoltaïques (118b), dans laquelle au moins une première cellule photovoltaïque de module capteur délivre un courant de court-circuit, et dans laquelle au moins une deuxième cellule photovoltaïque de module capteur délivre une tension de circuit ouvert.

12. La méthode telle que dans n'importe lesquelles des revendications 9 à 11, dans laquelle le module capteur comprend :

au moins trois premières cellules photovoltaïques de module capteur, dans laquelle chacune des premières cellules photovoltaïques de module capteur délivre un courant de court-circuit au récepteur ; et
au moins deux deuxièmes cellules photovoltaïques de module capteur, dans laquelle chacune des deuxièmes cellules photovoltaïques de module capteur délivre une tension de circuit ouvert au récepteur.

13. La méthode de la revendication 12, comprenant en outre le fait de faire la moyenne des valeurs des courants de court-circuit et le fait de faire la moyenne des valeurs des tensions de circuit ouvert.

FIG. 1A

FIG. 1B

EP 2 647 055 B1

**FIG. 2A**

$R_A = 400\Omega$

$R_B = 10k\Omega$

$R_C = 55.3\Omega$

**FIG. 2B**

EP 2 647 055 B1

FIG. 2C

200

Measure a first signal sent from a group of power-generator modules and store measurement 202

204 Are there additional groups of power-generator modules?

Yes

No

Pre-process first signal(s) 206

Measure a second signal sent from a sensor cell associated with a sensor module and store (repeat measurement for each cell) 208

210 Are there additional sensor modules?

Yes

No

Pre-process second signal(s) 212

Report anomalies/ failures 214

To FIG. 3B

FIG. 3A

From FIG. 3A

Measure a cell
degradation signal sent
from a reference cell and
store · 216

Process the second
signal(s) 218

Determine an operational
state of the array/module 220

Store and/or
communicate operational
state 222

# FIG. 3B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2249457 A
- US 2009182532 A

- WO 2009137353 A